# EUROPEAN PATENT APPLICATION

(11) **EP 2 853 990 A1**
(43) Date of publication of application: **01.04.2015**
(21) Application number: 14188138.3
(22) Date of filing: 06.09.2005
(51) Int. Cl.: G06F 3/033, G06F 1/16

(54) **Display actuator**

(30) Priority: 11.02.2005 US 57050
(62) Divisional of application: 10011508.8
(71) Applicant: Apple Inc., Cupertino, CA 95014 (US)
(72) Inventor: Zadesky, Stephen Paul, Cupertino, CA, 95014 (US); Ive, Jonathan P., Cupertino, CA, 95014 (US); Rohrbach, Matthew Dean, Cupertino, CA, 95014 (US); Stringer, Christopher J., Cupertino, CA, 95014 (US)
(74) Representative: Lang, Johannes

(57) **Abstract**

A display device that both displays visual information and that serves as a mechanical actuator to generate input signals is disclosed (i.e., display device is not only an output device, but also a mechanically actuated input device). By way of example, the display device, which displays visual information such as text, characters and graphics, may also act like a push or clickable button(s), a sliding toggle button or switch, a rotating dial or knob, a motion controlling device such as a joystick or navigation pad, and/or the like. The display actuator may be incorporated into any electronic device to control various aspects of the electronic device. Alternatively, the display actuator may be a stand alone device that operatively couples to an electronic devices through wired or wireless connections. In either case, the display actuator can be configured to generate commands, make selections and/or control movements in a display.

## Description

The present invention relates generally to electronic devices. More particularly, the present invention relates to an electronic device having a display having both input and output functionality.

There exist today many types of consumer electronic devices, each of which utilizes some sort of user interface. The user interface typically includes an output device in the form of a fixed display, such as an Liquid Crystal Display (LCD), and one or more input devices, which can be mechanically actuated as for example, switches, buttons, keys, dials, joysticks, navigation pads, or electrically activated as for example touch pads and touch screens. The display is typically configured to present visual information such as text and graphics, and the input devices are typically configured perform operations such as issuing commands, making selections or moving a cursor or selector in the consumer electronic device. Each of these well known devices has considerations such as size and shape limitations, costs, functionality, complexity, etc. that must bc taken into account when designing the consumer electronic device. In most cases, the user interface is positioned on the front face of the electronic device for easy viewing of the display and easy manipulation of the input devices.

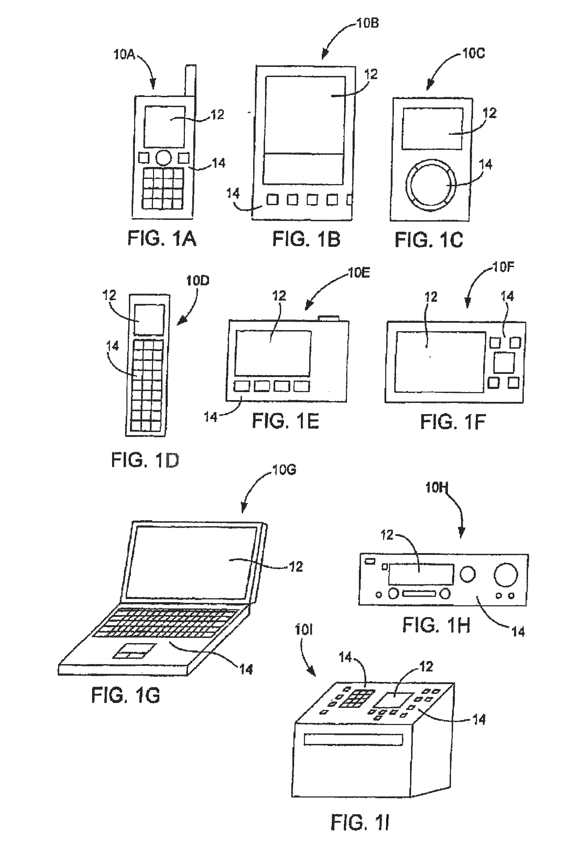

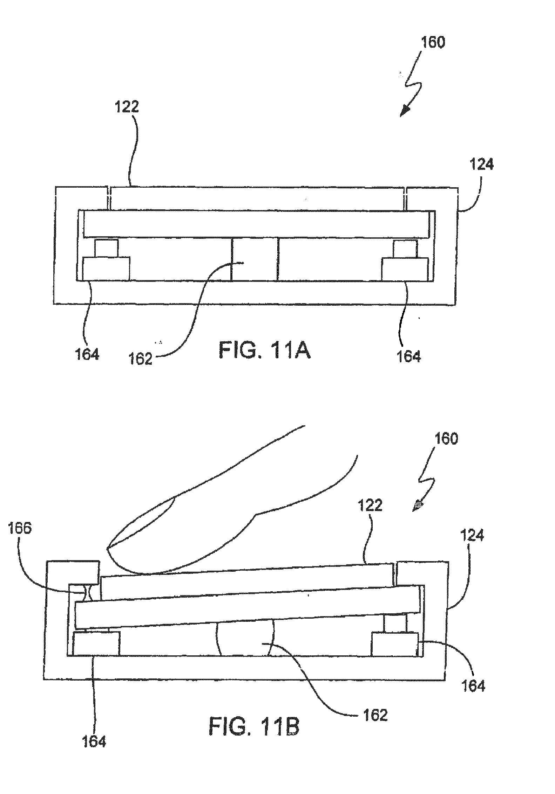

Figs. 1A-1F are diagrams of various handheld electronic devices including for example a telephone 10A (Fig. 1A), a PDA 10B (Fig. 1B), a media player 10C (Fig.1C), a remote control 10D (Fig. ID), a camera 10E (Fig. 1E), and a GPS module 10F (Fig. IF). Figs 1G-1H, on the other hand, are diagrams of other types of electronic devices including for example a laptop computer 10G (Fig. 1G), a stereo 10H (Fig. 1H), and a fax machine 10I (Fig. 11). In each of these devices 10, a display 12 is secured inside the housing of the device 10. The display 12 can be seen through an opening in the housing, and is typically positioned in a first region of the electronic device 10. One or more input devices 14 are typically positioned in a second region of the electronic device 10 next to the display 12 (excluding touch screens, which are positioned over the display).

To elaborate, the telephone 10A typically includes a display 12 such as a character or graphical display, and input devices 14 such as a number pad and in some cases a navigation pad. The PDA 10B typically includes a display 12 such as a graphical display, and input devices 14 such as a touch screen and buttons. The media player 10C typically includes a display 12 such as a character or graphic display, and input devices 14 such as buttons or wheels. The iPod brand media player manufactured by Apple Computer, Inc. of Cupertino, CA is one example of a media player that includes both a display and input devices disposed next to the display (iPod is a trade mark of Apple Computer, Inc. which is registered in some countries.) The remote control 10D typically includes an input device 14 such as a keypad and may or may not have a character display 12. The camera 10E typically includes a display 12 such as a graphic display and input devices 14 such as buttons. The GPS module 10F typically includes a display 12 such as graphic display and input devices 14 such as buttons, and in some cases a navigation pad. The laptop computer 10G typically includes a display 12 such as a graphic display, and input devices 14 such as a keyboard, a touchpad and in some cases a joystick. The iBook brand notebook computer manufactured by Apple Computer, Inc. of Cupertino, CA is one example of a laptop computer that includes both a display and input devices disposed next to the display as for example in a base. (iBook is a trade mark of Apple Computer Inc which is registered in some countries.) The stereo 10H typically includes a display 12 such as a character display, and input devices such as buttons and dials. The fax machine 10I typically includes a display 12 such as a character display, and input devices 14 such as a number pad and one or more buttons.

Although the user interface arrangements described above work particularly well, improved user interface devices, particularly ones that can reduce the amount of real estate required and/or ones that can reduce or eliminate input devices, are desired. By reducing or eliminating the input devices, the display of the electronic device can be maximized within the user interface portion of the electronic device, or alternatively the electronic device can be minimized to the size of the display.

The invention relates, in one aspect, to an integral input/output device. The integral input/output device includes a display that moves relative to a frame. The integral input/output device also includes a movement detection mechanism configured to generate signals when the display is moved. The signals are indicative of at least one predetermined movement of the display.

The invention relates, in another aspect, to an electronic device having a housing and a display device. The improvement includes constraining the display device within the housing while permitting a least one component of the display device to be moved within the housing so as to signal at least one user input.

The invention relates, in another aspect, to a hand held electronic device. The hand held electronic device includes a housing enclosing operational components of the hand held electronic device. The hand held electronic device also includes a display actuator disposed at a surface of the housing. The display actuator includes at least a display device and a detection mechanism. The display device is configured to present visual information within a viewing area of the housing. The display device also has a movable component that moves relative to the housing. The detection mechanism is configured to generate signals when the movable component is moved relative to the housing.

The invention relates, in another aspect, to a method for receiving a user input. The method is implemented on an electronic device having a display. The method includes displaying a graphical user interface on the display. The method also includes generating one or more input signals when the display is moved. The input signals are used to provide user input to the electronic device.

The invention relates, in another aspect, to an electronic device. The electronic device includes a housing. The electronic device also includes a movable display apparatus constrained within the housing, wherein physically moving the movable display apparatus within the housing operates to signal at least one user input.

Embodiments of the invention may will now be described in detail, by way of example only, with reference to the accompanying drawings, in which:
Figs. 1A-1I are diagrams of various electronic devices.
Fig. 2 is a side elevation view, in cross section, of a display actuator, in accordance with one embodiment of the present invention.
Figs. 3A and 3B are side elevation views, in cross section, of a push display button, in accordance with one embodiment of the present invention.
Figs. 4A and 4B are side elevation views, in cross section, of a sliding display switch, in accordance with one embodiment of the present invention.
Figs. 5A - 5C are side elevation views, in cross section, of a clickable display button, in accordance with one embodiment of the present invention.
Figs. 6A and 6B are side elevation views, in cross section, of a display dial, in accordance with one embodiment of the present invention.
Figs. 7A and 7B, are side elevation views, in cross section, of a display actuator with a touch screen, in accordance with one embodiment of the present invention.
Fig. 8 is a simplified perspective diagram of an electronic device, in accordance with one embodiment of the present invention.
Fig. 9 is a side elevation view, in cross section, of an electronic device, in accordance with one embodiment of the present invention.
Figs. 10A-10D are side elevation views, in cross section, of the electronic device shown in Fig. 9, in accordance with one embodiment of the present invention.
Figs. 11A and 11B are side elevation views, in cross section, of an electronic device, in accordance with an alternate embodiment of the present invention.
Fig. 12 is diagram of an electronic device, in accordance with an alternate embodiment of the present invention.
Fig. 13 is a diagram of an electronic device, in accordance with an alternate embodiment of the present invention.
Fig. 14 is a perspective diagram of an electronic device, in accordance with one embodiment of the present invention.
Fig. 15A is a side elevation view, in cross section, of an electronic device, in accordance with one embodiment of the present invention.
Fig. 15B is a top view, in cross section, of the electronic device shown in Fig. 15A, in accordance with one embodiment of the present invention.
Figs. 16A and 16B are side elevation views, in cross section, of the electronic device shown in Fig. 15A, in accordance with one embodiment of the present invention.
Fig. 17 is a diagram of an electronic device, in accordance with an alternate embodiment of the present invention.
Fig. 18 is a block diagram of an electronic device, in accordance with one embodiment of the present invention.

The invention relates to a display apparatus that both displays visual information and serves as a mechanical actuator to generate input signals. That is, the display apparatus is not only an output device, but also a mechanically actuated input device. Accordingly, in one embodiment, the display apparatus can be referred to as a display actuator. By way of example, the display apparatus, which displays visual information such as text, characters and/or graphics, may also act like a push or clickable button(s), a sliding toggle button or switch, a rotating dial or knob, a motion controlling device (such as a joystick or navigation pad), and/or the like. The display apparatus may be incorporated into any electronic device to control various aspects of the electronic device. Alternatively, the display apparatus may be a stand alone device that operatively couples to an electronic device through wired or wireless connections. For example, the display apparatus may be a peripheral input/output device that connects to a personal computer. In either case, the display apparatus can be configured to generate commands, make selections and/or control movements in a display.

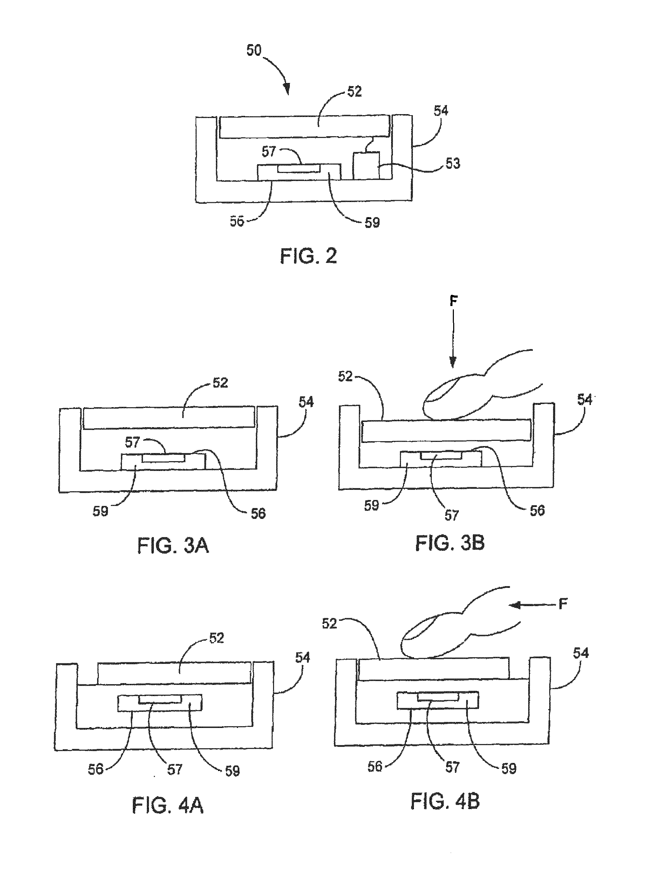

Embodiments of the invention are discussed below with reference to Figs. 2-18. However, those skilled in the art will readily appreciate that the detailed description given herein with respect to these figures is for explanatory purposes as the invention extends beyond these limited embodiments.

Fig. 2 is a display actuator 50, in accordance with one embodiment of the present invention. The display actuator 50 includes a movable display 52 that along with presenting visual information, such as text, characters and graphics via display signals from display control circuitry 53, also causes one or more input signals to be generated when moved. The input signals can be used to initiate commands, make selections, or control motion in a display. The display 52 is typically movable relative to a frame or housing 54 that movably supports the display in its various positions. In some cases, the display 52 is movably coupled to the frame 54, and in other cases the frame movably restrains a floating display. Furthermore, the input signals are typically generated by a detection mechanism 56 that monitors the movements of the display 52 and produces signals indicative of such movements.

The display 52, which again is configured to display text, characters and/or graphics via one or more display signals, is typically selected from flat panel devices although this is not a requirement and other types of displays may be utilized. Flat panel devices typically provide a rigid planar platform, which is robust and which makes for easy manipulation thereof. By way of example, the display 52 may correspond to a liquid crystal display (LCD) such as character LCDs that are capable of presenting text and symbols or graphical LCDs that are capable of presenting images, video, and graphical user interfaces (GUI). Alternatively, the display 52 may correspond to a display based on organic light emitting diodes (OLED), or a display that is based on electronic inks. More alternatively, the display may be based on plasma and DLP technologies.

The movements of the display 52 may be widely varied. For example, the movable display 52 may be configured to translate, slide, pivot, and/or rotate relative to the frame 54. As shown in Figs. 3A and 3B, the movable display 52 is configured to translate as, for example, in the z-direction, such that the display 52 is depressible (by a force F) in a manner similar to a push button. For example, the display 52 may translate between an upright and a depressed position in order to generate an input signal via the detection mechanism 56.

As shown in Figs. 4A and 4B, the movable display 52 is configured to slide in for example the x and/or y directions in a manner similar to a sliding switch. By way of example, the display 52 may slide between a first position and a second position in order to generate one or more user inputs via the detection mechanism 56. In some cases, the display 52 may also be configured to slide in the x/y plane thereby covering both the x and y directions as well as diagonals located therebetween.

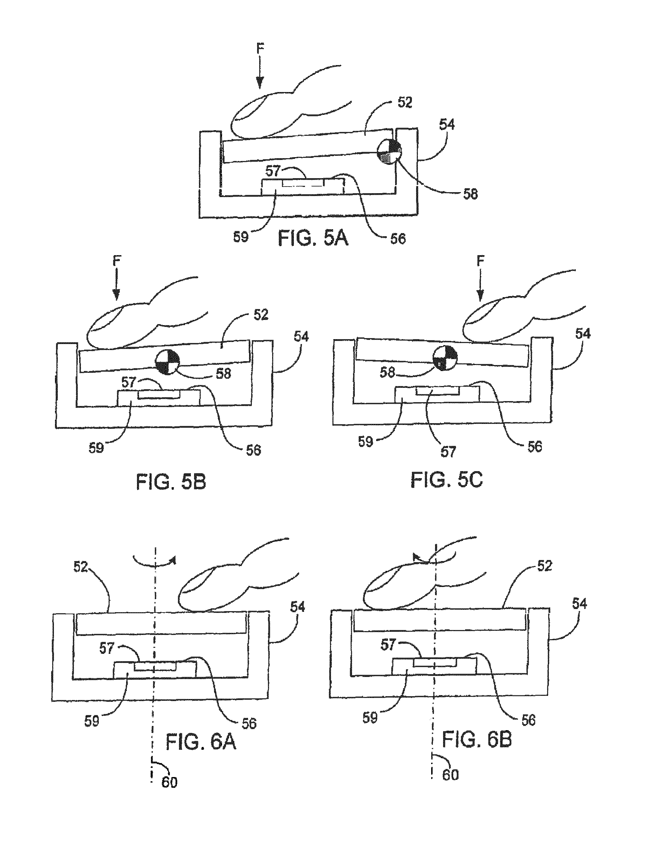

As shown in Fig. 5A - 5C, the movable display 52 is configured to pivot around an axis 58. In such embodiments, the display 52 can provide an action similar to a clickable button. The position of the axis 58 may be placed proximate an edge of the display 52 to form a single tilting action (Fig. 5A) or it may be placed towards the center of the display 52 to form multiple tilting actions (Figs. 5B and 5C). In the first case, a single input is typically generated when the display is tilted while in the later case multiple user inputs may be generated. For example, a first user input may be generated when the display 52 is tilted in the forward direction (Fig. 5B) and a second user input may be generated when the display 52 is tilted in the backward direction (Fig. 5C). Additional axes may also be used to produce even more tilting actions and thus more signals. For example, when a second axis is used, additional signals may be generated when the display 52 is tilted to the right and left sides rather than forward and backward.

As shown in Figs. 6A and 6B, the display 52 is configured to rotate as for example about the z axis 60 such that the display 52 operates similarly to a dial or wheel. For example, the display 52 may be rotated clockwise or counterclockwise in order to generate various user inputs via the detection mechanism 56.

It should be noted that the invention is not limited to the movements shown in Figs. 3-6, and that other movements are possible including for example a combination of the embodiments shown above. When combined, each of the various actions typically generates its own set of user inputs. Alternatively, combined actions may cooperate to produce a new set of user inputs. By way of example, the tilting action shown in Fig. 5 may be combined with the sliding action shown in Fig. 4, or the translating action of Fig. 3 may be combined with the rotating action of Fig. 6. Any combination of actions may be used including more than two. For example, the translating action of Fig. 3 may be combined with the tilting actions and rotating actions of Figs. 5 and 6.

In order to produce the various movements, the display 52 may be coupled to the frame 54 through various axels, pivot joints, slider joints, ball and socket joints, flexure joints, magnetic joints, roller joints, and/or the like. By way of example, and not by way of limitation, an axel may be used in the embodiment shown in Figs. 6A and 6B, a pivot joint utilizing for example pivot pins or a flexure may be used in the embodiment shown in Figs. 5A-5C, and a slider joint utilizing for example a channel arrangement may be used in the embodiments shown in Figs. 3A, 3B, 4A and 4B. The display 52 may additionally be made movable through a combination of joints such as a pivot/sliding joint, pivot/flexure joint, sliding/flexure joint, pivot/pivot joint, in order to increase the range of motion (e.g., increase the degree of freedom).

Furthermore, in order to generate signals indicative of the movements, the detection mechanism 56 generally includes one or more movement indicators 57 such as switches, sensors, encoders, and/or the like as well as input control circuitry 59. In one embodiment, the input control circuitry 59 can be embodied in an integrated circuit chip, such as an ASIC. These devices, which can be directly attached to the frame 54 or indirectly through for example a Printed Circuit Board (PCB). The devices may also be placed underneath the display 52 or at the sides of the display 52 in order to monitor the movements of the display 52. Alternatively or additionally, these devices may be attached to the display 52 or some component of the display 52. The movement indicators 57 may be any combination of switches, sensors, encoders, etc.

Switches are generally configured to provide pulsed or binary data such as activate (on) or deactivate (off). By way of example, an underside portion of the display 52 may be configured to contact or engage (and thus activate) a switch when the user presses on the display 52. Sensors are generally configured to provide continuous or analog data. By way of example, the sensor may be configured to continuously measure the position or the amount of tilt of the display 52 relative to the frame 54 when a user presses on the display 52. Encoders, on the other hand, typically utilize one or more switches or sensors to measure rotation, for example, rotation of the display 52.

Any suitable mechanical, electrical and/or optical switch, sensor or encoder may be used. For example, tact switches, force sensitive resistors, pressure sensors, proximity sensors, infrared sensors, mechanical or optical encoders and/or the like may be used in any of the arrangement described above.

Referring to Figs. 3A-6B, and by way of example and not limitation, an encoder may be used in the embodiment of Figs. 6A and 6B, one or more switches may be used in the embodiments shown in Figs. 3A, 3B, 5A, 5B and 5C, and one or more sensors may be used in the embodiment shown in Figs. 4A and 4B. It should be noted, however, that these particular arrangements are not a limitation and that other arrangements may be used to monitor the movements in the embodiments shown in Figs. 3A-6B.

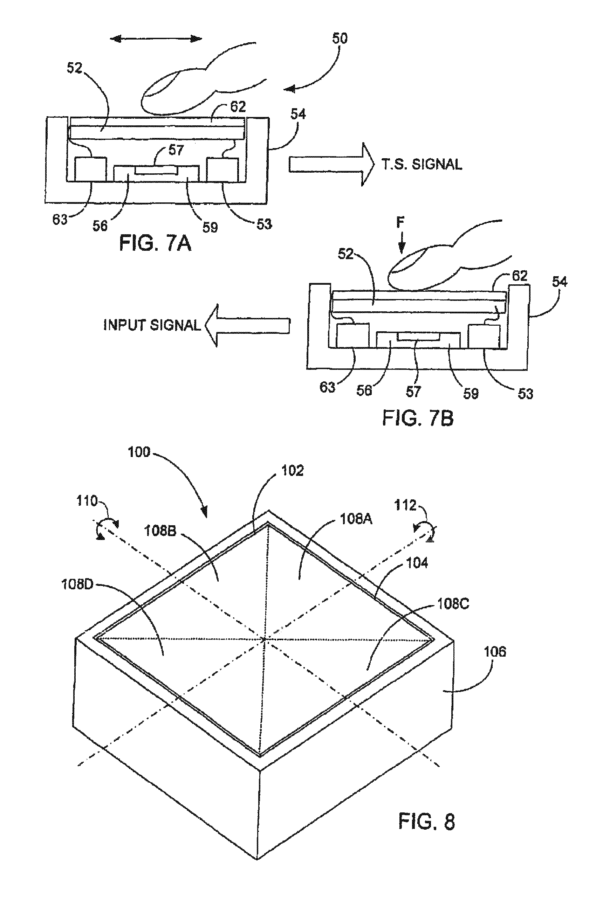

Referring to Figs. 7A and 7B, a touch screen 62 may be provided along with the movable display 52 to further increase the functionality of the display actuator 50. The touch screen 62 is a transparent panel that is positioned in front of the movable display 52. Unlike the movable display 52, however, the touch screen 62 generates input signals when an object, such as a finger, touches or is moved across the surface of the touch screen 62 (e.g., linearly, radially, rotary, etc.). The touch screen 62 is typically operatively coupled to input control circuitry 63. the input control circuitry 63 can be implemented as an integrated circuit chip, such as an ASIC. In some cases, the input control circuitry 63 can be combined with the input control circuitry 59 of the detection mechanism 56, while in other cases these components can be kept separate.

To elaborate, touch screens allow a user to make selections and/or move a cursor by simply touching the display screen via a finger or stylus. For example, a user may make a selection by pointing directly to a graphical object displayed on the display screen. The graphical object may for example correspond to an on-screen button for performing specific actions in the electronic device. In general, the touch screen recognizes the touch and position of the touch on the display and a controller of the electronic device interprets the touch and thereafter performs an action based on the touch event. There are several types of touch screen technologies including resistive, capacitive, infrared and surface acoustic wave.

In one particular embodiment, the touch screen is a capacitive touch screen that is divided into several independent and spatially distinct sensing points, nodes or regions that are positioned throughout the touch screen. The sensing points, which are typically hidden from view (transparent), are dispersed about the touch screen with each sensing point representing a different position on the surface of the touch screen (or touch screen plane). The sensing points may be positioned in a grid or a pixel array where each pixilated sensing point is capable of generating a signal. In the simplest case, a signal is produced each time an object is positioned over a sensing point. When an object is placed over multiple sensing points or when the object is moved between or over multiple sensing point, multiple signals can be generated. As should be appreciated, the sensing points generally map the touch screen plane into a coordinate system such as a Cartesian coordinate system a Polar coordinate system or some other coordinate system.

As shown in Fig. 7A, the touch screen 62 generates touch screen signals when an object such as a user's finger is moved over the top surface of the touch screen 62 in the x, y plane. As shown in Fig. 7B, when the display 52 is moved (e.g., depressed), the detection mechanism 56 generates one or more input signals. In some cases, the display actuator 50 is arranged to provide both the touch screen signals and the input signals at the same time, i.e., simultaneously moving the display 52 while implementing a touch action on the touch screen 62. In other cases, the display actuator 50 is arranged to only provide an input signal when the display 52 is moved and a touch screen signal when the display 52 is stationary. Furthermore, the display is configured to present visual information during both display movements and finger movements thereon. That is, while the display actuator 50 is reporting inputs from the touch screen and actuator, it is also receiving inputs for controlling the display.

In some cases, the display is configured to display information associated with the actuator portion of the display. For example, it may present information indicating how to use the actuator or what function the actuator will implement when the display is moved. The information is typically only presented in the region of relevance. For example, if a forward tilt produces a menu command, then the display may present a title "MENU" in the location of where the forward tilt is implemented. Alternatively, the display may present selectable icons in the region where the actuator will affect selection of one or more of the icons.

Referring to all the previous Figures, the display actuator 50, which includes both input and output functionality, is typically connected to an electronic device. The display actuator 50 may be a stand alone unit that is operatively coupled to the electronic device through wired or wireless connections. Alternatively, the display actuator 50 may be integrated into the electronic device, i.e., it is a permanent fixture of the electronic device. When a stand alone unit, the display actuator 50 typically has its own enclosure and can be considered a peripheral input device, such as a keyboard or mouse. When integrated with an electronic device, the display actuator 50 typically uses the enclosure of the electronic device and can be considered a permanent fixture of the electronic device.

The electronic device may correspond to any consumer related electronic product. By way of example, the electronic device may correspond to computers such as desktop computers, laptop computers or PDAs, media players such as music players, photo players or video players, communication devices such as telephones, cellular phones or mobile radios, peripheral devices such as keyboards, mice, and printers, cameras such as still cameras and video cameras, GPS modules, remote controls, car displays, audio/visual equipment such as televisions, radios, stereos, office equipment such a fax machines and teleconference modules, and the like.

In essence, the display actuator 50 can be integrated with any electronic device that requires an input means such as buttons, switches, keys, dials, wheels, joysticks/pads, etc. In fact, the display actuator 50 can in some instances completely replace all other input means (as well as output) of the electronic device. By way of example, the display and buttons of the media player shown in Fig. 1C can be replaced by the display actuator 50 thereby producing a device with no visible buttons.

One of the advantages of the display actuator 50 is that because the display provides user inputs, conventional user input means on electronic devices having displays can be substantially eliminated. Furthermore, the size of the display 52 can be maximized since the real estate is no longer needed for the conventional input means. For example, the display 52 can be configured to substantially fill the entire user interface portion of a hand-held electronic device without impairing the user input functionality. Alternatively, the hand-held electronic device can be minimized to the size of the display 52. In either case, the display 52 is allowed to utilize a greater amount of the real estate of the electronic device.

Fig. 8 is a simplified perspective diagram of an electronic device 100, in accordance with one embodiment of the present invention. The electronic device 100 includes a display actuator 102 that incorporates the functionality of a mechanical button(s) directly into a display device 104 seated within a housing 106. In other words, the display device 104 acts like a mechanical button(s). In this embodiment, the display device 104 is divided into a plurality of independent and spatially distinct button zones 108. The button zones 108 represent regions of the display device 104 that may be tilted relative to the housing 106 in order to implement distinct clicking actions. Although the display device 104 can be broken up into any number of button zones, in the illustrated embodiment, the display device 104 is separated into four button zones 108A-108D and thus implements four clicking actions.

The clicking actions are arranged to actuate one or more movement indicators contained inside the housing 106. That is, a particular button zone 108 moving from a first position (e.g., upright) to a second position (e.g., tilted) is caused to actuate a movement indicator. The movement indicators are configured to detect movements of display device 104 during the clicking action and to send signals corresponding to the movements to a controller of the electronic device. By way of example, the movement indicators may be switches, sensors and/or the like. In most cases, there is a movement indicator for each button zone. It should be noted, however, that this is not a limitation and that button zones do not necessarily require their own movement indicator. For example, a virtual button zone disposed between adjacent button zones can be created when two movement indicators associated with the adjacent button zones are activated at the same time. Using this technique, the four button zones shown in Fig. 8 may be expanded to include eight button zones without increasing the number of movement indicators.

The tilt of the display device 104 can be provided by a variety of different mechanisms including, for example, ball and socket arrangements, pivot pin arrangements, flexure arrangements, gimbal arrangements and the like. Each of these mechanisms allows the display device 104 to at least pivot about a first axis 110 so that the display device 104 can be tilted in the region of button zones 108A and 108D, and about a second axis 112 so that the display device 104 can be tilted in the region of button zones 108B and 108C.

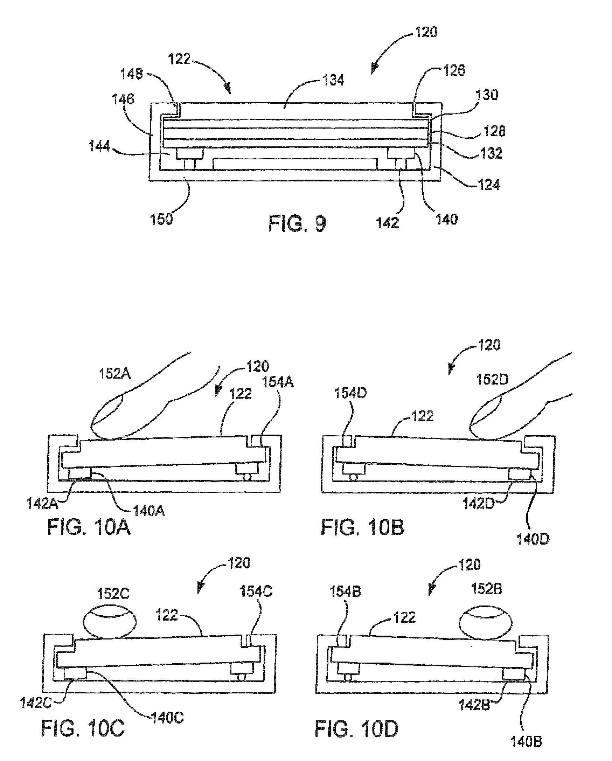

Fig. 9 is a side elevation view, in cross section, of an electronic device 120, in accordance with one embodiment of the present invention. The electronic device 120 may, for example, correspond to the electronic device shown in Fig. 8. The electronic device 120 includes a tiltable display device 122 seated within a housing 124. The housing 124 is configured to enclose the electrical components of the electronic device including the tiltable display device 122 and the control circuitry associated therewith. Although enclosed, the housing 124 typically includes an opening 126 for providing access to the display device 122. The tiltable display device 122, on the other hand, includes a display 128 and a touch screen 130 disposed above the display 128. In order to support and protect the display device 122 including the display 128 and touch screen 130 during movements, the display device 122 may additional include a platform 132 disposed underneath the display 128 and a transparent cover 134 disposed over the touch screen 130.

The transparent cover 134, which may be formed from a clear plastic material, may be part of the touch screen 130 or it may be a separate component. Furthermore, the platform 132, which is formed from a rigid material such as plastic or steel, may be a part of the display 128 or it may be a separate component. The platform 132 is primarily configured to help form a rigid structure to prevent bowing and flexing of the display device. The platform 132 may also include a printed circuit board to aid the connectivity of the devices coupled thereto. In some cases, all the elements of the display device 122 are attached together to form an integrated stacked unit. In other cases, the cover 134 and platform 132 are configured to encase the display 128 and touch screen 130. In fact, in cases such as this, the cover 134 may be configured to distribute a majority of the load exerted on the display device 122 to the platform 132 thereby protecting the display 128 and touch screen 130.

In order to generate input signals based on movements of the display device 122, the electronic device 120 further includes one or more mechanical switches 140 disposed between the display device 122 and the housing 124. The mechanical switches 140 include actuators 142 that generate input signals when depressed by movement of the display device 122. For example, tilting the display device 122 in the region of a mechanical switch 140 compresses the actuator 142 thereby generating input signals. In most cases, the actuators 142 are spring biased so that they extend away from the switch 140 and bias the display device 122 in the upright position. The mechanical switches 140 may be attached to the housing 124 or to the display device 122. In the illustrated embodiment, the mechanical switches 140 are attached to the backside of the display device 122, for example, at the platform 132. As such, the mechanical switches 140 and more particularly the actuators 142 act as legs for supporting the display device 122 in its upright position within the housing 124 (i.e., the actuators rest on the housing or some component mounted to the housing as for example a PCB). By way of example, the mechanical switches may correspond to tact switches and more particularly, enclosed SMT dome switches (dome switch packaged for SMT).

To elaborate further, the display device 122 is movably restrained within a cavity 144 provided in the housing 124. That is, the display device 122 is capable of moving within the cavity 144 while still being prevented from moving entirely out of the cavity 144 via the walls of the housing 124. In essence, the display device 122 floats in space relative to the housing 124 while still being constrained thereto (the display device is not attached to the housing). This is sometimes referred to as a gimbal.

As shown, the display device 122 is surrounded by side walls 146, a top wall 148 and bottom wall 150. The side walls 146 are configured to substantially prevent movements in the x and y directions as well as rotations about the z axis (e.g., excluding a small gap that allows a slight amount of play in order to prevent the display from binding with the housing during the tilting action). The top and bottom walls 148 and 150, however, are configured to allow movement (although limited) in the z direction as well as rotation about the x and y axis in order to provide the tilting action. That is, while the top and bottom walls 148 and 150 may constrain the display device 122 to the cavity 144, they also provide enough room for the display device 122 to tilt in order to depress the actuator 142 of the mechanical switches 140. Furthermore, the spring force provided by the mechanical switches 140 places the top surface of the display device 122 into mating engagement with the bottom surface of the top wall 148 of the housing 124 (e.g., upright position). When upright, the display device 122 may be flush with the outer peripheral surface of the housing 124 (as shown), or it may be recessed below the outer peripheral surface of the housing 124. It is generally believed that a flush mounted display is more aesthetically pleasing.

Referring to Figs. 10A-10D, one embodiment of Fig. 9 will be described in greater detail. In this particular embodiment, the display device 122 is separated into a plurality of buttons zones 152A-152D similar to the embodiment of Fig. 8. Although not expressly stated in Fig. 9, each of the button zones in Fig. 10 includes a distinct mechanical switch 140 located underneath the display device 122.

As shown in Figs. 10A-10D, a user simply presses on the top surface of the display device 122 in the location of the desired button zone 152A-152D in order to activate the mechanical switches 140A-140D disposed underneath the display device 122 in the location of the button zones 152A-152D. When activated, the switches 140 generate button signals that may be used by the electronic device. In all of these Figures, the force provided by the finger works against the spring force of the actuator until the switch 140 is activated. Although the display device 122 essentially floats within the cavity 144 of the housing 124, when the user presses on one side of the display device 122, the opposite side contacts the top wall 148 (opposite the press) thus causing the display device 122 to pivot about the contact point 154 without actuating the switch 140 in the region of the contact point 154. In essence, the display device 122 pivots about four different axes.

As shown in Fig. 10A, the display device 122 pivots about the contact point 154A when a user selects button zone 152A thereby causing the mechanical switch 140A to be activated. As shown in Figs. 10B, the display device 122 pivots about the contact point 154 D when a user selects button zone 154D thereby causing the mechanical switch 140D to be activated. As shown in Figs. 10C, the display device 122 pivots about the contact point 154C when a user selects button zone 152C thereby causing the mechanical switch 140C to be activated. As shown in Figs. 10D, the display device 122 pivots about the contact point 154B when a user selects button zone 152B thereby causing the mechanical switch 140B to be activated. As should be appreciated, the signals generated by the various switches 140 may be used by the electronic device to perform various control functions such as initiate commands, make selections, or control motion in a display.

By way of example, and referring to Figs. 8-10, the first button zone 108A may be associated with a first command, the second button zone 108B may be associated with a second command, the third button zone 108C may be associated with a third command and the fourth button zone 108D may be associated with a fourth command. In the case of a music player, for example, the first button zone 108A may correspond to a menu command, the second button zone 108B may correspond to a seek backwards command, the third button zone 108C may correspond to a seek forward command, and the fourth button zone 108D may correspond to a play/pause command.

Alternatively or additionally, the buttons zones 108A-D may be associated with arrow keys such that the actuation of the first button zone 108A initiates upward motion in the display 102, the actuation of the second button zone 108B initiates left side motion in the display 102, the actuation of the third button zone 108C initiates right side motion in the display 102, and the actuation of the fourth button zone 108D initiates downward motion in the display 102. This arrangement may be used to implement cursor control, selector control, scrolling, panning and the like.

Figs. 11A and 11B are diagrams of an electronic device 160, in accordance with an alternate embodiment of the present invention. This embodiment is similar to those shown in Figs 8-10, however instead of relying on the spring action of a mechanical switch, the electronic device utilizes a separate spring component. As shown, the electronic device 160 includes a display device 122 containing all of its various layers. The display device 122 is coupled to the housing 124 via a spring element 162. The spring element 162, or in some cases flexure, allows the display device 122 to pivot in multiple directions when a force is applied to the display device 122 thereby allowing a plurality of button zones to be created. The spring element 162 also urges the display device 122 into an upright position similar to the previous embodiments.

When the display device 122 is depressed at a particular button zone (overcoming the spring force), the display device 122 moves into contact with one or more switches 164 positioned underneath the button zone of the display device 122. Upon contact, the switch 164 generates a button signal. The switch 164 may be attached to the display device 122 or the housing 124. In the illustrated embodiment, the switch 164 is attached to the housing 124. In some cases, a seal 166 may be provided to eliminate crack and gaps found between the display device 122 and the housing 124 when the display device is tilted. The spring element 162 may be widely varied. For example, it may be formed from one or more conventional springs, pistons, magnets or compliant members. In the illustrated embodiment, the spring element 162 takes the form of a compliant bumper formed from rubber or foam.

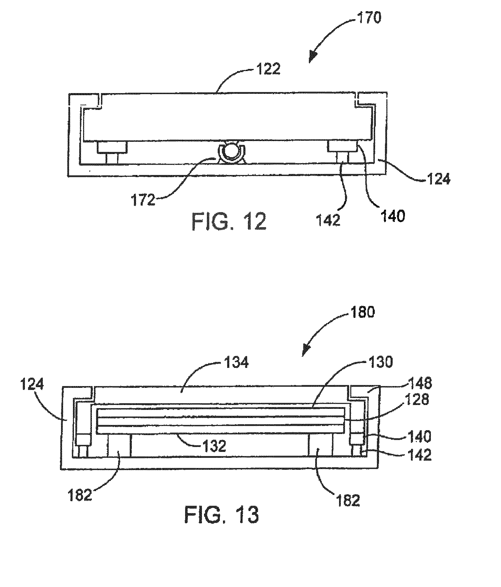

Fig. 12 is diagram of an electronic device 170, in accordance with an alternate embodiment of the present invention. This embodiment is similar to those shown in Figs 8-10, however instead of relying on a gimbal feature, the electronic device 170 utilizes a ball and socket joint 172 to movably couple the display device 122 to the housing 124. Like the gimbal of Figs. 9-10, or the spring element of Fig. 11, the ball and socket joint 172 allows the display device 122 to pivot in multiple directions when a force is applied to the display device 122 thereby allowing a plurality of button zones to be created.

Fig. 13 is a diagram of an electronic device 180, in accordance with an alternate embodiment of the present invention. This embodiment is similar to those shown in Figs. 8-10, however unlike those embodiments, the display 128 and touch screen 130 are fixed. In this particular embodiment, the cover 134 provides the tilting action for engaging the mechanical switches 140. For example, the mechanical switches 140 may be attached to the bottom surface of the cover 134 at the peripheral edge of the cover 134 underneath the top wall 148. Furthermore, the display 128 and touch screen 130 may be supported in a fixed position underneath the tiltable cover 134 via one or more posts 182, which may include shock mounting features.

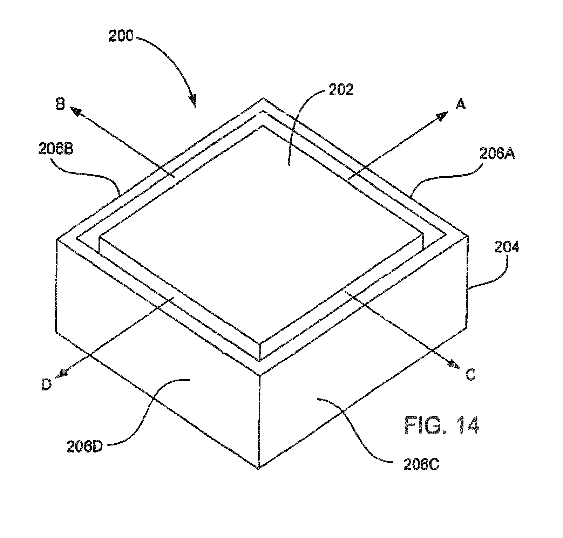

Fig. 14 is a perspective diagram of an electronic device 200, in accordance with one embodiment of the present invention. The electronic device 200 is similar to the embodiments described above in that different input signals are generated when moving the display to different positions. However, unlike those electronic devices, the electronic device 200 of Fig. 14 includes a sliding display device 202 rather than a tilting display device. As shown by the arrows, the display device 202 is configured to slide relative to the housing 204 in order to generate various input signals. Although the display device can be slid into an infinite number of positions including various diagonals between the arrows, in the illustrated embodiment, the display device 202 is configured to implement four clicking actions in directions towards the sides 206A-206D.

The clicking actions are arranged to actuate one or more movement indicators contained inside the housing 204. That is, display device 202 moving from a center position to a side position is caused to actuate a movement indicator. The movement indicators are configured to detect movements of display device 202 during the clicking action and to send signals corresponding to the movements to a controller of the electronic device 200. By way of example, the movement indicators may be switches, sensors and/or the like.

The sliding action of the display device 202 can be provided by a variety of different mechanisms including for example channel arrangements, roller arrangements, and the like. Each of these mechanisms allows the display device to at least slide in the direction of the arrows A-D, and in some cases may also allow the display device to slide in the x-y plane.

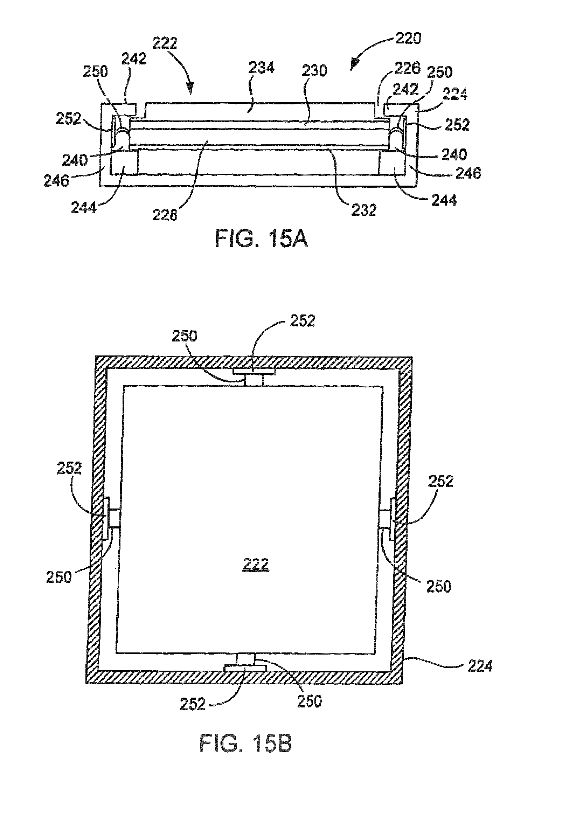

Figs. 15A and 15B are diagrams of an electronic device 220, in accordance with one embodiment of the present invention. The electronic device 220 may for example correspond to the electronic device shown in Fig. 14. The electronic device 220 includes a display device 222 slidably seated within a housing 224. The housing 224 is configured to enclose the electrical components of the electronic device 200 including the slidable display device 222 and control circuitry associated therewith. Although enclosed, the housing 224 typically includes an opening 226 for providing access to the display device 222. The slidable display device 222, on the other hand, includes a display 228 and a touch screen 230 disposed above the display 228. In order to support and protect the display device 228 during movements, the display device 228 may additional include a platform 232 disposed underneath the display 228 and a transparent cover 234 disposed over the touch screen 230.

The transparent cover 234, which may be formed from a clear plastic material, may be part of the touch screen 230 or it may be a separate component. Furthermore, the platform 232, which is formed from a rigid material such as plastic or steel, may be a part of the display 228 or it may be a separate component. The platform 232 is primarily configured to help form a rigid structure to prevent bowing and flexing of the display device 222. In some cases, all the elements of the display device 222 are attached together to form an integrated stacked unit. In other cases, the cover 234 and platform 232 are configured to encase the display 228 and touch screen 230. In fact, in cases such as this, the cover 234 may be configured to distribute a majority of the load exerted on the display device 222 to the platform 232 thereby protecting the display 228 and touch screen 230.

In order to produce the sliding action, the display device 222 is disposed within a channel 240. The width of the channel 240 is generally sized and dimension to receive the ends of the display device 222 and the depth of the channel 240 is generally sized to constrain the display device 222 to the housing 224 while leaving room for sliding movement. As shown, the channel 240 is formed by a top wall 242 of the housing 224 and a lower support structure 244 that protrudes away from the side wall 246 of the housing 224. The lower support structure 244 may span the entire length of the housing 224 from side to side or it may only span a partial length (as shown). Furthermore, the lower support structure 244 may be an integral component of the housing 224 (as shown) or it may be a separate component attached thereto. Alternatively, only the platform may be disposed within the channel.

The top surface of the lower support structure 244 may include a frictionless or low friction surface to enhance the sliding action and preventing sticktion between the display device 222 and the lower support structure 244 when the display device 222 is slid therebetween. Alternatively or additionally, the bottom surface of the display device 222 may also include a frictionless or low friction surface. Alternatively or additionally, the top surface of the display device in the location of the channel and/or the bottom surface of the top wall 242 may include a frictionless or low friction surface. By way of example, the frictionless or low friction surface may be formed from frictionless or low friction material such as Teflon. Alternatively, roller bearings may be used.

In most cases, the display device 222 is suspended within the channel 240 via one or more spring elements 250. The spring elements 250 are disposed between the sides of the display device 222 and the side walls of the housing 224. In the illustrated embodiment, there is a spring element 250 located at each of the sides of the display device 222. In most cases, the spring elements 250 are centered relative to the display device 222 so that the forces exerted by each spring elements 250 on the display device 222 are equally balanced. In essence, the spring elements 250 bias the display device 222 so that the display device 222 is centered relative to the opening 226 in the top wall 242. In order to slide the display device 222 from the center position to one of the side positions, the biasing force provided by the spring elements 250 must be overcome.

In order to generate input signals based on movements of the display device 222, the electronic device 220 further includes one or more sensors 252, such as force sensitive resistors (FSR), strain gauges or load cells, disposed between the display device 222 and the housing 224 in the location of the spring elements 250. These types of sensors 252 monitor the pressure exerted on them by the moving display device 222, and control circuitry generates signals when the force reaches a predetermined limit. By way of example, sliding the display device 222 towards the FSR sensor 252 compresses the FSR sensor 252 and as a result input signals are generated. The sensor 252 may be attached to the housing 224 or to the display device 222. In the illustrated embodiment, the sensors 252 are attached to the housing 224 between the spring element 250 and the housing 224.

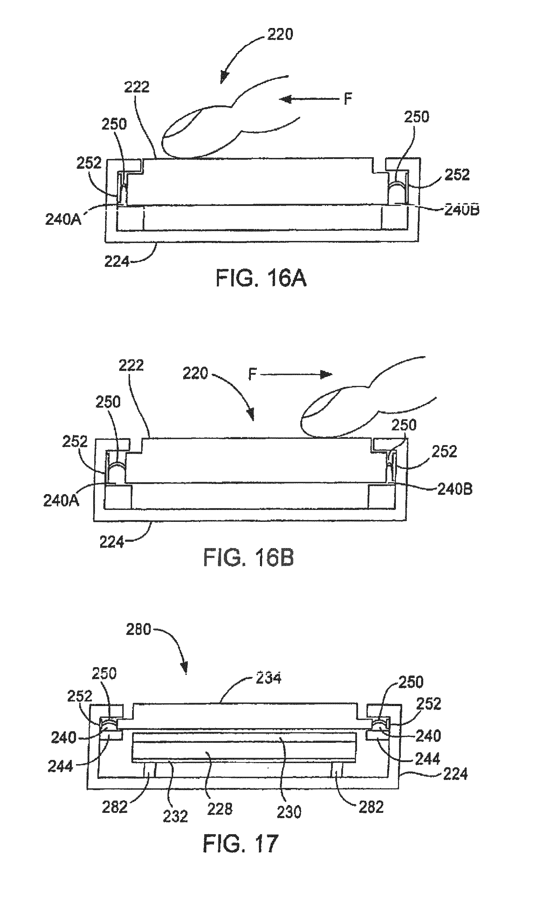

Referring to Figs. 16A and 16B, one embodiment of Fig. 15 will be described in greater detail. In order to select a button feature, a user places their finger on the top surface of the display device 222 and slides the display device 222 in the direction of the desired button feature. During sliding, the force provided by the finger works against the spring force of the spring elements 250 disposed between the display device 222 and the housing 224. Furthermore, one end of the display device 222 is inserted deeper into the channel section 240A while the opposite end is removed, but not entirely from the channel section 240B, which is opposite the channel section 240A. As the display device 222is inserted deeper into the channel 240A, a greater amount of force is applied to the sensor 252 through the spring element 250. Once a pre-set limit has been reached, the sensor circuit generates a button signal that may be used by the electronic device 220 to perform a control functions such as initiating commands, making selections, or controlling motion in a display.

Fig. 17 is a diagram of an electronic device 280, in accordance with an alternate embodiment of the present invention. This embodiment is similar to those shown in Figs. 14-16, however unlike those embodiments, the display 228 and touch screen 230 are fixed. In this particular embodiment, the cover 234 provides the sliding action for engaging the sensors 252 rather than the entire display device. As shown, the cover 234 is retained within the channels 240 and suspended by the spring elements 250 while the display 228 and touch screen 230 are supported in a fixed position underneath the slidable cover 234 via one or more posts 282, which may include shock mounting features.

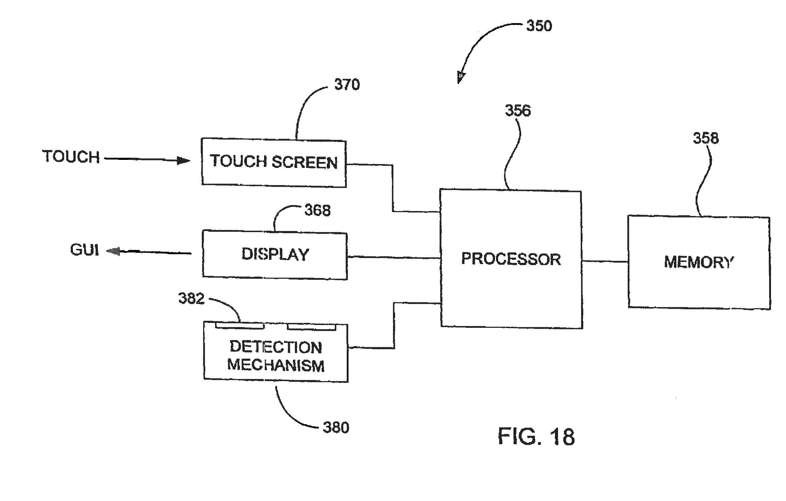

Fig. 18 is a block diagram of an exemplary electronic device 350, in accordance with one embodiment of the present invention. The electronic device typically includes a processor 356 configured to execute instructions and to carry out operations associated with the electronic device 350. For example, using instructions retrieved for example from memory, the processor 356 may control the reception and manipulation of input and output data between components of the electronic device 350. The processor 356 can be implemented on a single-chip, multiple chips or multiple electrical components. For example, various architectures can be used for the processor 356, including dedicated or embedded processor, single purpose processor, controller, ASIC, and so forth.

In most cases, the processor 356 together with an operating system operates to execute computer code and produce and use data. The operating system may correspond to well known operating systems such as OS/2, DOS, Unix, Linux, and Palm OS, or alternatively to special purpose operating system, such as those used for limited purpose appliance-type devices (e.g., media players). The operating system, other computer code and data may reside within a memory block 358 that is operatively coupled to the processor 356. Memory block 358 generally provides a place to store computer code and data that are used by the electronic device 350. By way of example, the memory block 358 may include Read-Only Memory (ROM), Random-Access Memory (RAM), hard disk drive and/or the like.

The electronic device 350 also includes a movable display 368 that is operatively coupled to the processor 356. The display 368 is generally configured to display a graphical user interface (GUI) that provides an easy to use interface between a user of the electronic device 350 and the operating system or application running thereon. The display 368 may for example be a liquid crystal display (LCD).

The electronic device 350 also includes a touch screen 370 that is operatively coupled to the processor 356. The touch screen 370 is configured to transfer data from the outside world into the electronic device 350. The touch screen 370 may for example be used to perform tracking and to make selections with respect to the GUI on the display 368. The touch screen 370 may also be used to issue commands in the electronic device 350.

The touch screen 370, which is positioned in front of the display 368, recognizes touches, as well as the position and magnitude of touches on a touch sensitive surface. The touch screen 370 reports the touches to the processor 356 and the processor 356 interprets the touches in accordance with its programming. For example, the processor 356 may initiate a task in accordance with a particular touch. A dedicated processor can be used to process touches locally and reduce demand for the main processor of the electronic device.

The touch screen 370 may be based on sensing technologies including but not limited to capacitive sensing, resistive sensing, surface acoustic wave sensing, and/or the like. Furthermore, the touch screen may be based on single point sensing or multipoint sensing. Single point sensing is capable of only distinguishing a single touch, while multipoint sensing is capable of distinguishing multiple touches that occur at the same time. By way of example, a touch screen which can be used herein is shown and described in greater detail in copending and commonly assigned U.S. Patent Application No.: 10/840,862, titled "MULTIPOINT TOUCHSCREEN," filed on May 6, 2004, and which is hereby incorporated herein by reference.

In some case, the electronic device 350 may be designed to recognize gestures applied to the touch screen 370 and to control aspects of the electronic device 350 based on the gestures. Generally speaking, a gesture is defined as a stylized interaction with an input device that is mapped to one or more specific computing operations. The gestures may be made through various hand, and more particularly finger motions. Alternatively or additionally, the gestures may be made with a stylus. In all of these cases, the touch screen 370 receives the gestures and the processor 356 executes instructions to carry out operations associated with the gestures. In addition, the memory block 358 may include a gesture operational program, which may be part of the operating system or a separate application. The gestural operation program generally includes a set of instructions that recognizes the occurrence of gestures and informs one or more software agents of the gestures and/or what action(s) to take in response to the gestures. By way of example, gesture methods, which can be used herein, are shown and described in greater detail in copending and commonly assigned U.S. Patent Application No.: 10/903,964, titled "GESTURES FOR TOUCH SENSITIVE INPUT DEVICES," filed on July 30,2004 and which is hereby incorporated herein by reference.

The electronic device 350 also includes a detection mechanism 380 that is operatively coupled to the processor 356. The detection mechanism 380, utilizing movement indicators 382 such as switches and sensors, is configured to monitor movements of the display 368 or some component thereof (e.g., cover), and to send signals indicative of the movements to the processor 356, which interprets the signals in accordance with its programming. In some cases, a dedicated processor can be used to process the movement signals and reduce demand for the main processor of the electronic device.

As mentioned above, the movable display 368 is configured to mimic a mechanical actuator such as a clickable button, a sliding switch or a joystick. The display region of the electronic device 350 can therefore be used to transfer data from the outside world into the electronic device 350. The display region may for example be used to issue commands in the electronic device 350 or control motion and make selections with respect to the GUI on the display 368.

In one particular embodiment of the present invention, the electronic devices described above correspond to hand-held electronic devices with small form factors. As used herein, the term "hand held" means that the electronic device is typically operated while being held in a hand and thus the device is sized and dimension for such use. Examples of hand held devices include PDAs, Cellular Phones, Media players (e.g., music players, video players, game players), Cameras, GPS receivers, Remote Controls, and the like.

Hand held electronic devices may be directed at one-handed operation or two-handed operation. In one-handed operation, a single hand is used to both support the device as well as to perform operations with the user interface during use. Cellular phones such as handsets, and media players such as music players are examples of hand held devices that can be operated solely with one hand. In either case, a user may grasp the device in one hand between the fingers and the palm and use the thumb to make entries using keys, buttons or a navigation pad. In two-handed operation, one hand is used to support the device while the other hand performs operations with a user interface during use or alternatively both hands support the device as well as perform operations during use. PDA's and game players are examples of hand held device that are typically operated with two hands. In the case of the PDA, for example, the user may grasp the device with one hand and make entries using the other hand, as for example using a stylus. In the case of the game player, the user typically grasps the device in both hands and makes entries using either or both hands while holding the device.

The display actuator of the present invention is a perfect fit for small form factor devices such as hand held devices, which have limited space available for input interfaces, and which require central placement of input interfaces to permit operation while being carried around. This is especially true when you consider that the functionality of handheld devices have begun to merge into a single hand held device (e.g., smart phones). At some point, there is not enough real estate on the device for housing all the necessary buttons and switches without decreasing the size of the display or increasing the size of the device, both of which leave a negative impression on the user. In fact, increasing the size of the device may lead to devices, which are no longer considered "hand-held."

When the display is incorporated into the hand held device (e.g., integrated into the device housing), the display presents the visual information associated with the hand-held electronic device, while the mechanical action of the display and possibly the touch sensitivity of the touch screen provides the input means necessary to interact with the hand-held electronic device. The display actuator can therefore reduce the number of input devices needed to support the device and in many cases completely eliminate input devices other than the display actuator. As a result, the hand-held electronic device may appear to only have a display and no input means (or very few). The device is therefore more aesthetically pleasing (e.g., smooth surface with no breaks gaps or lines), and in many cases can be made smaller without sacrificing screen size and input functionality, which is very beneficial for hand-held electronic device especially those hand-held electronic device that are operated using one hand (some hand-held electronic device require two handed operation while others do not). Alternatively, the screen size can be made larger without affecting the size of the device and input functionality, i.e., the display can be made to substantially fill the entire front surface of the hand held device.

In one particular implementation, the hand held device is a music player and the display actuator is configured to substantially fill the entire front surface of the music player. The display actuator is the primary input means of the music player and in some cases is the only input means. Furthermore, the display actuator is configured to generate control signals associated with a music player. For example, the display actuator may include button functions including, Select, Play/Pause, Next, Previous and Menu. Alternatively or additionally, the button functions may include volume up and volume down.

While this invention has been described in terms of several preferred embodiments, there are alterations, permutations, and equivalents, which fall within the scope of this invention. It should also be noted that there are many alternative ways of implementing the methods and apparatuses of the present invention.

Although the invention can be defined as stated in the attached claims, it is to be understood that the present invention can alternatively also be defined as stated in the following embodiments:
1. An integral input/output device, comprising:
   a display that moves relative to a frame; and
   a movement detection mechanism configured to generate signals when the display is moved, the signals being indicative of at least one predetermined movement of the display.
2. An electronic device having a housing and a display device, wherein the improvement comprises constraining the display device within the housing while permitting a least one component of the display device to be moved within the housing so as to signal at least one user input.
3. An electronic device as recited in embodiment 2, wherein the at least one component of the display device can be moved in a plurality of different positions so as to signal a plurality of different user inputs.
4. An electronic device as recited in embodiment 2, wherein the display device serves as a primary user input mechanism for the electronic device.
5. An electronic device as recited in embodiment 2, wherein the display device serves as the only user input mechanism for the electronic device.
6. An electronic device as recited in embodiment 2, wherein the electronic device is a handheld electronic device.
7. A hand held electronic device, comprising:
   a housing enclosing operational components of the hand held electronic device; and
   a display actuator disposed at a surface of the housing, the display actuator including at least:
      a display device configured to present visual information within a viewing area of the housing, the display device having a movable component that moves relative to the housing, and
      a detection mechanism configured to generate signals when the movable component is moved relative to the housing.
8. The hand held electronic device as recited in embodiment 7 wherein the display device includes a display, the display being configured to present text, characters or graphics.
9. The hand held electronic device as recited in embodiment 8 wherein the display is a liquid crystal display.
10. The hand held electronic device as recited in embodiment 8 wherein the display is the movable component.
11. The hand held electronic device as recited in embodiment 8 wherein the display device includes a transparent cover positioned over the display, and wherein the transparent cover and the display cooperate to form the movable component.
12. The hand held electronic device as recited in embodiment 11 wherein the display device includes a touch screen positioned between the display and the transparent cover, and wherein the transparent cover, touch screen and display cooperate to form the movable component of the display device.
13. The hand held electronic device as recited in embodiment 8 wherein the display device includes a transparent cover positioned over the display, and wherein the transparent cover is the only movable component of the display device.
14. The hand held electronic device as recited in embodiment 8 wherein the display device includes a platform disposed below the display, a touch screen positioned over the display, and a transparent cover positioned over the touch screen, and wherein the display, touch screen, transparent cover and platform cooperate to form the movable component of the display device.
15. The hand held electronic device as recited in embodiment 7 wherein the movable component translates between an upright and a depressed position relative to the housing in order to generate an input signal via the detection mechanism.
16. The hand held electronic device as recited in embodiment 7 wherein the movable component slides between a first position and a second position relative to the housing in order to generate an input signal via the detection mechanism.
17. The hand held electronic device as recited in embodiment 7 wherein the movable component is pivoted between an upright position and a tilted position relative to the housing in order to generate an input signal via the detection mechanism.
18. The hand held electronic device as recited in embodiment 7 wherein the movable component is rotated about an axis relative to the housing in order to generate an input signal via the detection mechanism.
19. The hand held electronic device as recited in embodiment 7 wherein the detection mechanism includes one or movement indicators that generate signals indicative of the movements of the movable component, the movement indicators being selected from switches, sensors or encoders.
20. The hand held electronic device as recited in embodiment 7 wherein the housing includes an opening for providing access to the display device, the display device being tiltably seated within the housing, and the detection mechanism including one or more mechanical switches disposed between the display device and the housing, the mechanical switches generating input signals when the display device is tilted in the region of the mechanical switch.
21. The hand held electronic device as recited in embodiment 7 wherein the housing includes an opening for facilitating user interaction with the display device, the display device being slidably seated within the housing, and the detection mechanism including one or more sensors disposed between the display device and the housing, the sensors generating input signals when the display device is slid in the region of the sensor, the sensors being selected from force sensitive resistors, strain gauges or load cells.
22. The hand held electronic device as recited in embodiment 21 wherein the housing includes a channel and wherein the display device is disposed within the channel in order to permit a sliding action of the display device relative to the housing, and wherein the display device is suspended within the channel via one or more spring elements.
23. A method for receiving a user input, said method being implemented on an electronic device having a display, said method comprising:
   displaying a graphical user interface on the display; and
   generating one or more input signals when the display is moved, the input signals being used to provide user input to the electronic device.
24. A method as recited in embodiment 23, wherein the display is movable.
25. A method as recited in embodiment 23, wherein the electronic device includes a housing, and wherein the display is movable within the housing.
26. An electronic device, comprising:
   a housing; and
   a movable display apparatus constrained within the housing, wherein physically moving the movable display apparatus within the housing operates to signal at least one user input.
27. The electronic device as recited in embodiment 26 wherein the movable display apparatus translates, slides, pivots or rotates relative to the housing.
28. The electronic device as recited in embodiment 26 wherein the electronic device is a hand held media player, and wherein the at least one user input is a media control input.
29. The electronic device as recited in embodiment 26 wherein the movable display apparatus is the only input means of the electronic device.
30. The electronic device as recited in embodiment 26 wherein the movable display apparatus is the primary input means of the electronic device.
31. A handheld media player, comprising:
   a housing for enclosing internally various functional components for operating the handheld media player, the housing including an opening;
   a display capable of presenting text and/or graphics covering the opening and including internal circuitry, the display cooperating with the housing to form the peripheral surfaces of the handheld media player, the display having a flat outer touchable surface that is exposed to a user of the handheld media player, display being configured to tilt to at least four positions relative to the housing, the at least four positions including a top tilt position, a bottom tilt position, a left tilt position and a right tilt position; and
   a plurality of mechanical switches located within the housing and underneath the display, the plurality of mechanical switches including at least four mechanical switches that cooperate with the tilting of the display to provide at least four distinct user inputs, the four mechanical switches including a first mechanical switch, a second mechanical switch, a third mechanical switch and a fourth mechanical switch, the first mechanical switch being located underneath a top portion of the display, the second mechanical switch being located underneath a bottom portion of the display, the third mechanical switch being located underneath a left portion of the display, and the fourth mechanical switch being located underneath a right portion of the display, the first mechanical switch generating a first switch signal when the display is tilted to the top tilt position, the second mechanical switch generating a second switch signal when the display is tilted to the bottom tilt position, the third mechanical switch generating a third switch signal when the display is tilted to the left tilt position, the fourth mechanical switch generating a fourth switch signal when the display is tilted to the right tilt position.
32. A handheld media player as recited in embodiment 31, wherein the handheld media player further comprises a circuit board having one or more electrical components mounted thereon, and
   wherein display electrically couples to one or more electrical components mounted on the circuit board.
33. A handheld media player as recited in embodiment 32, wherein the circuit board is provided internal to said housing such that the circuit board is beneath the display.
34. A handheld media player as recited in embodiment 33, wherein the first, second, third and fourth mechanical switches are mounted on different sides of one surface of the circuit board.
35. A handheld media player as recited in embodiment 31, wherein the display includes at least a circuit board having one or more electrical components mounted thereon.
36. A handheld media player as recited in embodiment 31, wherein depressing a side of the display causes a corresponding one of the mechanical switches to provide a switch signal.
37. A handheld media player as recited in embodiment 31, wherein the display can be depressed inward substantially uniformly such that two or more of the first, second, third and fourth mechanical switches provide their corresponding switch signals.
38. A handheld media player as recited in embodiment 31, wherein the display is a liquid crystal display.
39. A handheld media player as recited in embodiment 31, wherein the housing has a front surface, and wherein the opening of the housing is at the front surface.
40. A handheld media player as recited in embodiment 39, wherein the display consumes substantially all of the front surface of the housing.
41. A handheld media player as recited in embodiment 31, wherein the handheld media player stores media items that can be presented to the user by the handheld media player, and wherein interaction with the display by the user of the handheld media player enables the user of the handheld media player to make media selections from the media items.

## Claims

1. An electronic device, comprising:
a display device configured for being divided into a plurality of dynamically configurable touch zones and detecting a touch;
at least one movement indicator configured for detecting an application of pressure on the display device; and
a controller communicatively coupled to the at least one movement indicator and capable of
receiving an indication of detected pressure from the at least one movement indicator,
determining a particular dynamically configurable touch zone, and
interpreting the determined particular dynamically configurable touch zone and the detected pressure to determine a function to be performed.

2. The apparatus of claim 1, the at least one depressible movement indicator comprising one or more pressure sensors.

3. The apparatus of claim 2, wherein at least one of the one or more pressure sensors is a capacitive sensor.

4. The apparatus of claim 2, the controller further capable of determining the particular dynamically configurable touch zone based on an actuation of the one or more pressure sensors.

5. The apparatus of claim 1, the controller further capable of determining the particular dynamically configurable touch zone based on a detected touch on the display device.

6. The apparatus of claim 2, further comprising at least one pressure sensor located proximate to one or more of the dynamically configurable touch zones.

7. The apparatus of claim 1, wherein the display device is a touch screen configured for displaying an icon at one or more of the plurality of dynamically configurable touch zones.

8. A method for interpreting a touch on a display device, comprising:
designating a plurality of dynamically configurable touch zones on the display device;
detecting an application of pressure on the display device;
determining a particular dynamically configurable touch zone; and
interpreting the determined particular dynamically configurable touch zone and the detected pressure to determine a function to be performed.

9. The method of claim 8, further comprising detecting the application of pressure using at least one depressible hardware button.

10. The method of claim 8, wherein detecting the application of pressure comprises actuating one or more pressure sensors.

11. The method of claim 10, wherein at least one of the one or more pressure sensors is a capacitive sensor.

12. The method of claim 10, further comprising determining the particular dynamically configurable touch zone based on an actuation of the one or more pressure sensors.

13. The method of claim 8, further comprising determining the particular dynamically configurable touch zone based on a detected touch on the display device.

14. The method of claim 10, further comprising providing at least one pressure sensor proximate to one or more of the dynamically configurable touch zones.

15. The method of claim 8, further comprising displaying an icon at one or more of the plurality of dynamically configurable touch zones.
